# FASCICULE DE BREVET EUROPEEN

(11) **EP 3 956 731 B1**
(45) Date de publication et mention de la délivrance du brevet: **20.05.2026**
(21) Numéro de dépôt: 20716523.4
(22) Date de dépôt: 10.04.2020
(51) Int. Cl.: G04B 13/00, B23K 26/06, B23K 26/0622, G04F 7/08, G04D 3/00

(54) **COMPOSANT HORLOGER DE TYPE CAME**
UHRWERKSKOMPONENTE VOM TYP NOCKE
CAM TYPE TIMEPIECE COMPONENT

(30) Priorité: 15.04.2019 EP 19169228
(43) Date de publication de la demande: 23.02.2022
(73) Titulaire: ROLEX SA, 1211 Genève 26 (CH)
(72) Inventeur: BRUCKERT, Florent, 74140 SCIEZ-SUR-LÉMAN (FR); CALAME, Florian, 1066 ÉPALINGES (CH); OLIVEIRA, Alexandre, 74800 Amancy (FR)
(74) Mandataire: Moinas & Savoye SARL
(86) Numéro de dépôt international: PCT/EP2020/060317
(87) Numéro de publication internationale: WO 2020/212281

(56) Documents cités:
- EP-A1- 1 750 894
- EP-A1- 2 942 147
- EP-A1- 3 260 932
- JEAN-RENÉ GONTHIER: "Nouveau laser dual couplé au jet d'eau", 30 May 2018 (2018-05-30), XP002796351, Retrieved from the Internet <URL:https://www.msm.ch/nouveau-laser-dual-couple-au-jet-deau-a-720404/> [retrieved on 20180530]
- ROBERT LAMINAGE S.A: "Fiche technique Phynox", 3 September 2018 (2018-09-03), XP002796352, Retrieved from the Internet <URL:http://robertlaminage.ch/fichiers/fichestechniques/FT974_PHYNOX_FR.pdf> [retrieved on 20180903]

## Description

### Introduction

La présente invention concerne un composant horloger de type came. en céramique ou en cermet.

L'invention porte aussi sur un mouvement horloger et une pièce d'horlogerie, comme une montre, comprenant un tel composant horloger. Elle porte aussi sur un procédé de fabrication d'un tel composant horloger.

### Etat de l'Art

Un composant horloger de type came présente la particularité de présenter une surface latérale, que nous appellerons flanc, définie pour remplir une fonctionnalité au sein d'un mouvement horloger, en coopérant avec un composant voisin. Une telle surface latérale pourra aussi être appelée « flanc fonctionnel ». Pour remplir au mieux leur fonctionnalité, de tels composants horlogers doivent idéalement présenter un flanc rigide, de faible rugosité et d'orientation parfaitement définie, en général dans un plan perpendiculaire à une surface principale du composant horloger. Ces composants horlogers peuvent de plus devoir présenter une épaisseur importante, pour présenter un flanc de surface suffisante, ce qui peut s'avérer difficile à coordonner avec les critères de fonctionnalité énumérés ci-dessus.

Outre ces propriétés spécifiques d'un flanc fonctionnel, un tel composant horloger doit avantageusement présenter les autres propriétés généralement attendues d'un composant horloger, comme une insensibilité aux champs magnétiques, et la possibilité d'être fabriqué de manière fiable et en grande série. Des procédés existants reposent sur des étapes d'usinage plus ou moins complexes pour obtenir un flanc fonctionnel acceptable. Ces procédés sont fastidieux, et souvent incompatibles avec une cadence élevée, voire inadaptés à certaines géométries ou à certains matériaux. Il existe dans l'art antérieur, des documents tels que EP3260932A1 et l'article de Jean-René Gonthier : "Nouveau laser dual couplé au jet d'eau*"* qui cherchent déjà une solution aux contraintes citées ci-dessus, mais ils ne sont pas toujours adaptés aux composants horlogers de type came.

La réunion de toutes les contraintes mentionnées précédemment sur un composant horloger de type came, ou autrement dit à flanc fonctionnel, fait que les solutions existantes ne sont pas totalement satisfaisantes, et qu'elles reposent sur certains compromis qui ne sont pas totalement optimisés.

Ainsi, un objet général de l'invention est de définir une solution améliorée pour un composant horloger de type came ou à flanc fonctionnel en céramique ou en cermet.

Plus particulièrement, un objet de l'invention est d'offrir une solution de composant horloger de type came permettant d'optimiser le compromis consistant à proposer une fabrication industrielle tout en atteignant un flanc fonctionnel le plus performant possible.

### Brève description de l'invention

A cet effet, l'invention repose sur un composant horloger selon les termes de la revendication 1 telle qu'annexée.

L'invention porte aussi sur un procédé de fabrication d'un tel composant horloger, caractérisé en ce qu'il comprend une étape de découpe au laser d'une bande épaisse en céramique ou en cermet de dureté supérieure ou égale à 600 HV, par la combinaison de deux faisceaux laser différents au sein d'un jet liquide ou par une découpe au laser femto-seconde, pour former au moins un flanc fonctionnel du composant horloger, ledit composant horloger comprenant une épaisseur supérieure ou égale à 200 microns, voire supérieure ou égale à 350 microns, voire supérieure ou égale à 400 microns et en ce qu'il comprend une étape de terminaison. Cette étape de terminaison permet notamment de réduire la rugosité dudit flanc fonctionnel à une rugosité inférieure ou égale à 50 nm.

Le composant horloger comprend donc au moins un flanc fonctionnel, comme une came, une roue, un ressort etc.

L'invention est plus précisément définie par les revendications.

### Brève description des figures

Ces objets, caractéristiques et avantages de l'invention, seront exposés en détail dans la description suivante d'un mode de réalisation particulier fait à titre non-limitatif en relation avec les figures jointes parmi lesquelles :
La figure 1 représente un dispositif de fabrication d'un composant horloger de type came selon un mode de réalisation de l'invention.
La figure 2 est un agrandissement d'une partie de la figure précédente.
Les figures 3 et 4 représentent des vues en perspective sous différents angles d'un composant horloger de type came selon un mode de réalisation de l'invention.

L'invention repose sur un procédé de fabrication qui comprend une première étape de mise à disposition d'une plaquette 5 présentant une épaisseur importante choisie et dans le matériau choisi. En variante, la plaquette pourrait être remplacée par toute autre forme, que nous appellerons plus généralement « bande épaisse ». Le matériau de cette bande épaisse est choisi très rigide, notamment de dureté supérieure ou égale à 600 HV.

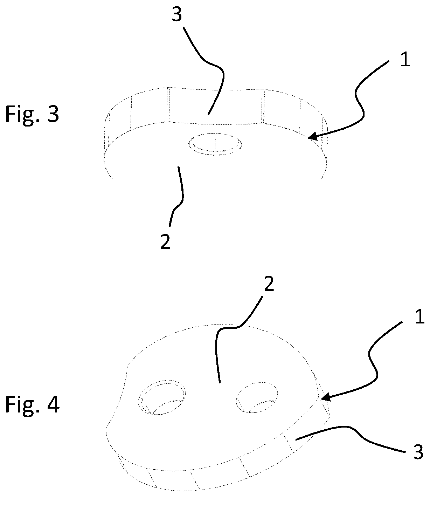

Nous allons maintenant décrire un procédé de fabrication d'une came pour mouvement horloger selon un mode de réalisation de l'invention, plus particulièrement représentée par les figures 3 et 4. Ce mode de réalisation pourra être étendu à la fabrication de tout composant horloger de type came, ou tout composant horloger comprenant au moins un flanc fonctionnel.

Selon ce mode de réalisation de l'invention, la came est conçue en un matériau très rigide, notamment de dureté supérieure ou égale à 600 HV, et présente une épaisseur importante, supérieure ou égale à 200 microns, voire supérieure ou égale à 350 microns, voire supérieure ou égale à 400 microns.

Selon l'invention le matériau est une céramique ou un cermet.

A titre d'exemple, ce matériau peut être choisi parmi les cermets à base d'argent, ou à base de cuivre, ou les cermets connus par leur dénomination de GO312Wrose et Kyocera. Ce matériau peut aussi être l'alumine Al2O3 ou la zircone. Il est de même très rigide, notamment de dureté supérieure ou égale à 600 HV.

Ce mode de réalisation fait intervenir une découpe multi-passes, qui nécessite plusieurs passages d'un faisceau laser au même endroit pour découper la totalité de l'épaisseur, comme cela sera détaillé ci-après.

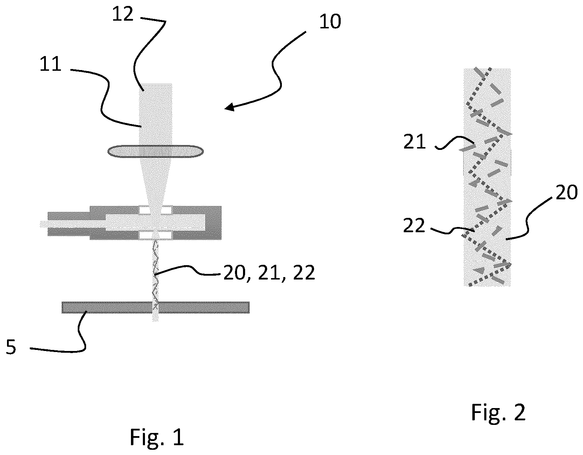

Selon le mode de réalisation de l'invention, le procédé de fabrication comprend ensuite une deuxième étape consistant en la découpe de la bande épaisse. La figure 1 représente plus précisément un dispositif de fabrication 10 qui met en œuvre cette deuxième étape selon une première variante. Cette étape de découpe utilise deux faisceaux laser de nature différente et complémentaire. Selon la première variante du mode de réalisation, le procédé utilise une première source laser 11 dite MASTER, c'est-à-dire un laser vert d'une puissance moyenne à mi-hauteur pouvant atteindre 50W, avec une durée des pulsations comprises entre 80 et 400 ns et une fréquence de 6 à 20 kHz, et une deuxième source laser 12 dit SLAVE, plus précisément un laser vert d'une puissance moyenne à mi-hauteur pouvant atteindre 20W avec une durée des pulsations comprises entre 7 et 20 ns et une fréquence de 80 à 130 kHz. Ces deux sources laser 11, 12 peuvent être utilisées simultanément, comme illustré sur les figures 1 et 2, ou successivement. En complément, selon le mode de réalisation, ces deux sources laser génèrent respectivement un faisceau 21, 22 qui est guidé au sein d'un jet liquide 20, comme représenté sur l'agrandissement de la figure 2. Un tel guidage est notamment détaillé dans le document EP1750894. Selon le type de matériau et son épaisseur, le mode de découpe se fera de préférence en multi-passes, comme mentionné précédemment, indépendamment de l'utilisation simultanée ou successive des deux sources laser 11 et 12.

Selon le type de matériau et son épaisseur, les puissances moyennes à mi-hauteur des sources laser pourront être abaissées, par exemple à des valeurs comprises entre 10 à 12 W pour la source laser MASTER ou à des valeurs comprises entre 2 et 19 W pour la source laser SLAVE. Plus particulièrement, pour des bandes en alumine d'épaisseur de 200 microns, la puissance moyenne à mi-hauteur de la source laser SLAVE peut être comprise entre 18 et 19 W. En variante, d'autres combinaisons de deux sources laser peuvent être implémentées.

En alternative, selon une deuxième variante du mode de réalisation de l'invention, le procédé de fabrication comprend une deuxième étape consistant en la découpe de la bande épaisse utilisant un laser femto-seconde vert d'une puissance moyenne pouvant atteindre 55W, avec des durées de pulsations/d'impulsion comprise entre 270 fs à 10 ps et une fréquence allant de 1 kHz à 2000 MHz. En variante, d'autres sources laser à impulsions ultra-courtes, comme des sources émettant dans l'infra-rouge (1030 nm) ou l'ultra-violet (343 nm), peuvent être utilisées.

Enfin, le procédé de fabrication comprend avantageusement une étape de terminaison, qui comprend tout ou partie des étapes supplémentaires suivantes :
- Un polissage de la surface principale de la came de sorte à réduire la rugosité et à garantir l'épaisseur finale ; et/ou
- Une tribofinition du ou des flancs fonctionnels de sorte à réduire la rugosité.

En complément, le procédé de fabrication peut comprendre une étape de nettoyage.

Les figures 3 et 4 illustrent une came 1 de mouvement horloger telle que revendiquée en forme de cœur selon un mode de réalisation de l'invention. Elle a été obtenue par le procédé de fabrication décrit ci-dessus, et se présente avec une épaisseur de 440 microns. Elle a été obtenue à partir d'une bande épaisse de 480 microns d'épaisseur, et a subi une étape de finition de polissage de sa surface principale 2 plane, qui a réduit son épaisseur. La came 1 présente de plus des flancs fonctionnels 3 perpendiculaires à sa surface principale 2 selon la définition ci-dessous. De plus, après une étape de terminaison, notamment après une étape de polissage ou de tribofinition, les flancs fonctionnels 3 de la came terminée présentent une rugosité Ra inférieure à 50 nm.

Plus généralement, il apparaît que l'invention repose sur un nouvel optimum dans lequel un composant horloger de type came comprend à la fois une grande dureté supérieure ou égale à 600 HV, une épaisseur importante, supérieure ou égale à 200, voire supérieure ou égale à 350 microns, voire supérieure ou égale à 400 microns, voire supérieure ou égale à 430 microns, un flanc fonctionnel d'orientation maitrisée, s'écartant d'au maximum un degré par rapport à l'orientation souhaitée, et de très faible rugosité Ra, inférieure ou égale à 50 nm. Notamment, le flanc fonctionnel présente un angle supérieur à 89 degrés par rapport au plan de la surface principale adjacente. Il comprend un angle entre 89 et 90 degrés ou entre 89 et 91 degrés par rapport à ce plan. La rugosité Ra peut même être inférieure ou égale à 40 nm, voire inférieure ou égale à 30 nm. La réunion de ces caractéristiques est optimale ; l'invention permet en effet d'atteindre un résultat idéal sur chaque paramètre, sans en privilégier certains au détriment d'autres, ce qui est remarquable.

Le composant horloger selon l'invention peut être tout composant présentant donc au moins un flanc fonctionnel. Avantageusement, ce composant horloger comprend une forme sensiblement bidimensionnelle, comprenant un ou plusieurs flancs fonctionnels agencés sur son contour entre deux surfaces principales planes opposées. Son épaisseur se mesure donc comme la distance entre ces deux surfaces principales opposées. En variante, cette notion peut être étendue à un composant horloger plus complexe, comprenant au moins une partie correspondant à un mode de réalisation de l'invention. En variante encore, l'invention s'applique aussi à un composant qui pourrait avoir une structure plus proche d'une forme tridimensionnelle, ses surfaces principales n'étant par exemple pas planes, mais sensiblement planes. L'épaisseur considérée sera alors l'épaisseur moyenne au niveau des extrémités des surfaces principales, adjacentes au flanc fonctionnel considéré. L'invention s'applique ainsi à au moins une partie de forme sensiblement plane d'un composant horloger, cette partie étant définie par deux surfaces sensiblement planes et parallèles, dites surfaces principales, reliées par une surface plus étroite s'étendant donc dans l'épaisseur de ladite partie, formant un flanc du composant horloger. Cette partie du composant horloger se présente avantageusement en un seul matériau, de manière monobloc.

Selon l'invention, le composant horloger peut être une came, comme un cœur, un limaçon ou colimaçon, une navette ou une roue à colonnes. Selon un mode qui ne fait pas partie de l'invention, le composant peut être un disque de quantième. Il peut comprendre un ou plusieurs flancs fonctionnels agencés sur son pourtour. Il peut fonctionner en effectuant une rotation complète ou incomplète, par exemple en effectuant des va-et-vient. Naturellement, l'invention ne se limite pas aux exemples précédents.

Enfin, l'invention porte aussi sur un mouvement horloger intégrant au moins un tel composant horloger à flanc fonctionnel. Elle porte aussi sur une pièce d'horlogerie intégrant au moins un tel composant horloger à flanc fonctionnel.

## Revendications

1. Composant horloger de type came comprenant au moins une partie de forme sensiblement plane se présentant en céramique ou en cermet de dureté supérieure ou égale à 600 HV, ladite partie comprenant une épaisseur supérieure ou égale à 350 microns, et **caractérisé en ce qu'**il comprend au moins un flanc fonctionnel (3) sensiblement perpendiculaire à une surface principale (2) de ladite partie et de rugosité Ra inférieure ou égale à 50 nm.

2. Composant horloger de type came selon l'une des revendications précédentes, **caractérisé en ce que** ladite épaisseur est supérieure ou égale à 400 microns.

3. Composant horloger de type came selon l'une des revendications précédentes, **caractérisé en ce qu'**il comprend une surface principale (2) plane et **en ce que** ledit au moins un flanc fonctionnel (3) sensiblement perpendiculaire s'étend depuis cette surface principale plane et présente un angle compris entre 89 et 91 degrés inclus par rapport à cette surface principale plane.

4. Composant horloger de type came selon l'une des revendications précédentes, **caractérisé en ce que** ledit au moins un flanc fonctionnel (3) présente une rugosité Ra inférieure ou égale à 40 nm, voire inférieure ou égale à 30 nm.

5. Composant horloger de type came selon l'une des revendications précédentes, **caractérisé en ce qu'**il est une came, comme un cœur, un limaçon ou colimaçon, une navette ou une roue à colonnes.

6. Mouvement horloger, **caractérisé en ce qu'**il comprend un composant horloger selon l'une des revendications précédentes.

7. Pièce d'horlogerie, **caractérisée en ce qu'**elle comprend un composant horloger selon l'une des revendications 1 à 5 ou un mouvement horloger selon la revendication précédente.

8. Procédé de fabrication d'un composant horloger de type came selon l'une des revendications 1 à 5, **caractérisé en ce qu'**il comprend une étape de découpe d'une bande épaisse en céramique ou en cermet de dureté supérieure ou égale à 600 HV, par la combinaison de deux faisceaux laser différents au sein d'un jet liquide ou par un faisceau laser d'un laser femto-seconde pour former au moins un flanc fonctionnel (3) du composant horloger, ledit composant horloger comprenant une épaisseur supérieure ou égale à 200 microns, voire supérieure ou égale à 350 microns, voire supérieure ou égale à 400 microns et **en ce qu'**il comprend une étape de terminaison pour obtenir une rugosité Ra du flanc fonctionnel (3) inférieure ou égale à 50 nm.

9. Procédé de fabrication d'un composant horloger de type came selon la revendication précédente, **caractérisé en ce que** l'étape de découpe comprend l'utilisation de deux faisceaux laser différents au sein d'un jet liquide, provenant respectivement d'une première source laser MASTER et d'une seconde source laser SLAVE différente pour obtenir les au moins deux faisceaux laser différents, en alternance ou de manière successive.

10. Procédé de fabrication d'un composant horloger de type came selon la revendication précédente, **caractérisé en ce que** ladite première source laser MASTER est un laser vert d'une puissance moyenne à mi-hauteur inférieure ou égale à 50W avec une durée des pulsations comprises entre 80 et 400 ns et une fréquence comprise entre 6 et 20 kHz, et **en ce que** ladite deuxième source laser SLAVE est un laser vert d'une puissance moyenne à mi-hauteur inférieure ou égale à 20W avec une durée des pulsations comprises entre 7 et 20 ns et une fréquence comprise entre 80 à 130 kHz.

11. Procédé de fabrication d'un composant horloger de type came selon la revendication 8 ou 10, **caractérisé en ce que** l'étape de découpe comprend l'utilisation de deux faisceaux laser différents au sein d'un jet liquide et est une étape de découpe multi-passe.

12. Procédé de fabrication d'un composant horloger de type came selon la revendication 8, **caractérisé en ce que** l'étape de découpe comprend l'utilisation d'un laser femto-seconde et est une étape de découpe multi-passe de ladite bande épaisse.

13. Procédé de fabrication d'un composant horloger de type came selon l'une des revendications 8 à 12, **caractérisé en ce que** l'étape de terminaison comprend tout ou partie des étapes supplémentaires suivantes :
- un polissage de la surface principale de la came ; et/ou
- une tribofinition du ou des flancs fonctionnels de sorte à réduire la rugosité.

## Patentansprüche

1. Uhrenkomponente vom Typ Nocken, welche mindestens einen Teil von im Wesentlichen ebener Form umfasst, der aus Keramik oder aus Cermet mit einer Härte, die größer oder gleich 600 HV ist, besteht, wobei dieser Teil eine Dicke aufweist, die größer oder gleich 350 Mikrometer ist, und **dadurch gekennzeichnet, dass** sie mindestens eine funktionelle Flanke (3) umfasst, die im Wesentlichen senkrecht zu einer Hauptfläche (2) des Teils ist, mit einer Rauigkeit Ra, die kleiner oder gleich 50 nm ist.

2. Uhrenkomponente vom Typ Nocken nach einem der vorhergehenden Ansprüche, **dadurch gekennzeichnet, dass** die Dicke größer oder gleich 400 Mikrometer ist.

3. Uhrenkomponente vom Typ Nocken nach einem der vorhergehenden Ansprüche, **dadurch gekennzeichnet, dass** sie eine ebene Hauptfläche (2) umfasst, und dadurch, dass die mindestens eine, im Wesentlichen senkrechte funktionelle Flanke (3) sich von dieser ebenen Hauptfläche aus erstreckt und einen Winkel zwischen 89 und 91 Grad (einschließlich) bezüglich dieser ebenen Hauptfläche aufweist.

4. Uhrenkomponente vom Typ Nocken nach einem der vorhergehenden Ansprüche, **dadurch gekennzeichnet, dass** die mindestens eine funktionelle Flanke (3) eine Rauigkeit Ra aufweist, die kleiner oder gleich 40 nm oder sogar kleiner oder gleich 30 nm ist.

5. Uhrenkomponente vom Typ Nocken nach einem der vorhergehenden Ansprüche, **dadurch gekennzeichnet, dass** sie ein Nocken ist, wie ein Herz, eine Staffel oder Schnecke, ein Schiffchen oder ein Säulenrad.

6. Uhrwerk, **dadurch gekennzeichnet, dass** es eine Uhrenkomponente nach einem der vorhergehenden Ansprüche umfasst.

7. Uhr, **dadurch gekennzeichnet, dass** sie eine Uhrenkomponente nach einem der Ansprüche 1 bis 5 oder ein Uhrwerk nach dem vorhergehenden Anspruch umfasst.

8. Verfahren zur Herstellung einer Uhrenkomponente vom Typ Nocken nach einem der Ansprüche 1 bis 5, **dadurch gekennzeichnet, dass** es einen Schritt des Zuschneidens eines dicken Streifens aus Keramik oder aus Cermet mit einer Härte, die größer oder gleich 600 HV ist, durch die Kombination von zwei verschiedenen Laserbündeln innerhalb eines Flüssigkeitsstrahls oder durch ein Laserbündel eines Femtosekundenlasers umfasst, um mindestens eine funktionelle Flanke (3) der Uhrenkomponente zu formen, wobei die Uhrenkomponente eine Dicke aufweist, die größer oder gleich 200 Mikrometer oder sogar größer oder gleich 350 Mikrometer oder sogar größer oder gleich 400 Mikrometer ist, und dadurch, dass es einen Schritt des Fertigstellens umfasst, um eine Rauigkeit Ra der funktionellen Flanke (3) zu erhalten, die kleiner oder gleich 50 nm ist.

9. Verfahren zur Herstellung einer Uhrenkomponente vom Typ Nocken nach dem vorhergehenden Anspruch, **dadurch gekennzeichnet, dass** der Schritt des Zuschneidens die Verwendung von zwei verschiedenen Laserbündeln innerhalb eines Flüssigkeitsstrahls umfasst, die von einer ersten Laserquelle MASTER bzw. von einer zweiten, anderen Laserquelle SLAVE kommen, um die mindestens zwei verschiedenen Laserbündel abwechselnd oder nacheinander zu erhalten.

10. Verfahren zur Herstellung einer Uhrenkomponente vom Typ Nocken nach dem vorhergehenden Anspruch, **dadurch gekennzeichnet, dass** die erste Laserquelle MASTER ein grüner Laser mit einer mittleren Leistung bei Halbwertsbreite, die kleiner oder gleich 50 W ist, mit einer Impulsdauer zwischen 80 und 400 ns und einer Frequenz zwischen 6 und 20 kHz ist, und dadurch, dass die zweite Laserquelle SLAVE ein grüner Laser mit einer mittleren Leistung bei Halbwertsbreite, die kleiner oder gleich 20 W ist, mit einer Impulsdauer zwischen 7 und 20 ns und einer Frequenz zwischen 80 und 130 kHz ist.

11. Verfahren zur Herstellung einer Uhrenkomponente vom Typ Nocken nach Anspruch 8 oder 10, **dadurch gekennzeichnet, dass** der Schritt des Zuschneidens die Verwendung von zwei verschiedenen Laserbündeln innerhalb eines Flüssigkeitsstrahls umfasst und ein Schritt des Multipass-Schneidens ist.

12. Verfahren zur Herstellung einer Uhrenkomponente vom Typ Nocken nach Anspruch 8, **dadurch gekennzeichnet, dass** der Schritt des Zuschneidens die Verwendung eines Femtosekundenlasers umfasst und ein Schritt des Multipass-Schneidens des dicken Streifens ist.

13. Verfahren zur Herstellung einer Uhrenkomponente vom Typ Nocken nach einem der Ansprüche 8 bis 12, **dadurch gekennzeichnet, dass** der Schritt des Fertigstellens alle oder einen Teil der folgenden zusätzlichen Schritte umfasst:
- ein Polieren der Hauptfläche des Nockens; und/oder
- ein Gleitschleifen der funktionellen Flanke oder Flanken, um die Rauigkeit zu verringern.

## Claims

1. A cam-type timepiece component (1), comprising at least one part of substantially flat form made of ceramic or of cermet with a hardness greater than or equal to 600 HV, said part having a thickness greater than or equal 350 microns, and **characterized in that** it comprises at least one functional flank (3) substantially perpendicular to a main surface (2) of said part and with a roughness Ra less than or equal to 50 nm.

2. The cam-type timepiece component as claimed in one of the preceding claims, **characterized in that** said thickness is greater than or equal to 400 microns.

3. The cam-type timepiece component as claimed in one of the preceding claims, **characterized in that** it has a flat main surface (2) and **in that** said at least one substantially perpendicular functional flank (3) extends from this flat main surface and has an angle of between 89 and 91 degrees inclusive with respect to this flat main surface.

4. The cam-type timepiece component as claimed in one of the preceding claims, **characterized in that** said at least one functional flank (3) has a roughness Ra less than or equal to 40 nm, or even less than or equal to 30 nm.

5. The cam-type timepiece component as claimed in one of the preceding claims, **characterized in that** it is a cam, such as a heart-shaped cam, a spiral or notched cam snail, a shuttle or a column-wheel.

6. A horological movement, **characterized in that** it comprises a timepiece component as claimed in one of the preceding claims.

7. A timepiece, **characterized in that** it comprises a timepiece component as claimed in one of claims 1 to 5 or a horological movement as claimed in the preceding claim.

8. A method for manufacturing a cam-type timepiece component as claimed in one of claims 1 to 5, **characterized in that** it comprises a step of cutting of a thick strip of ceramic or of cermet with a hardness greater than or equal to 600 HV, by the combination of two different laser beams within a liquid jet or by one laser beam of a femtosecond laser to form at least one functional flank (3) of the timepiece component, said timepiece component having a thickness greater than or equal to 200 microns, or even greater than or equal to 350 microns, or even greater than or equal to 400 microns and **in that** it comprises a termination step to obtain a roughness Ra of the functional flank (3) less than or equal to 50 nm.

9. The method for manufacturing a cam-type timepiece component as claimed in the preceding claim, **characterized in that** the cutting step comprises the use of two different laser beams within a liquid jet, originating respectively from a first, MASTER laser source and from a second, different, SLAVE laser source to obtain the at least two different laser beams, alternating or in succession.

10. The method for manufacturing a cam-type timepiece component as claimed in the preceding claim, **characterized in that** said first, MASTER laser source is a green laser with an average power at mid-height less than or equal to 50 W with a pulse duration of between 80 and 400 ns and a frequency of between 6 and 20 kHz, and **in that** said second, SLAVE laser source is a green laser with an average power at mid-height less than or equal to 20 W with a pulse duration of between 7 and 20 ns and a frequency of between 80 and 130 kHz.

11. The method for manufacturing a cam-type timepiece component as claimed in claim 8 or 10, **characterized in that** the cutting step comprises the use of two different laser beams within a liquid jet and is a multi-pass cutting step.

12. The method for manufacturing a cam-type timepiece component as claimed in claim 8, **characterized in that** the cutting step comprises the use of a femtosecond laser and is a step of multi-pass cutting of said thick strip.

13. The method for manufacturing a cam-type timepiece component as claimed in one of claims 8 to 12, **characterized in that** the termination step comprises all or part of the following additional steps:
- a polishing of the main surface of the cam; and/or
- a tribofinishing of the functional flank or flanks so as to reduce the roughness.
